# EUROPEAN PATENT APPLICATION

(11) **EP 2 177 175 A1**
(43) Date of publication of application: **21.04.2010**
(21) Application number: 08018038.3
(22) Date of filing: 15.10.2008
(51) Int. Cl.: A61C 1/08

(54) **Non-invasive reference device**

(71) Applicant: Straumann Holding AG, 4002 Basel (CH)
(72) Inventor: Jung, Ronald, 8700 Küsnacht (CH)
(74) Representative: Schaad, Balass, Menzl & Partner AG

(57) **Abstract**

The present invention relates to a non-invasive reference device (21) which is intended to be temporarily fixed on a tooth (35). The reference device is made of a biocompatible, radiopaque material and allows the determination of anatomical structures in a jaw.

## Description

The present invention relates to non-invasive reference devices for implants, in particular dental implants.

Dental implants are devices which are surgically implanted into the jawbone of a patient in areas where the patient is missing teeth. Said dental implants mimic the roots of the teeth and serve to support prosthetic caps, crowns and bridges.

Implants must be placed in a specific position and in alignment to the prospective teeth that they will eventually support. Therefore, the positioning of these dental implants must be precise to enable teeth to be made that will function properly and be aesthetic in appearance.

A surgical template may be used as a guide to assist the surgeon in positioning and angling the dental implant drill during dental implant surgery. Usually, in a first step, a wax model of a dental prosthesis is made using an impression that is taken of the patient's jaw. A replica of this wax model is then prepared in synthetic resin, in said replica openings are already provided, corresponding to a possible position for the implants, for the purpose of drilling holes in the jaw. A so-called CT-scan (*computer tomography scan*) then has to be made of this replica when it has been placed on the corresponding jaw of the patient, in order to determine the anatomical bone structure and the precise location of nerve bundles and blood vessels. In this way it is checked whether the drilling of holes for the implants is possible, taking into account the anatomical structure of the jaw, such as, inter alia, the position of nerve bundles or blood vessels present there. If it is found that the proposed position of the implants is unsuitable because, for example, nerve bundles or blood vessels would be touched during the drilling of holes, a new or an adapted model has to be produced.

In a subsequent step, a template is then produced on the basis of the above-mentioned replica, and the implants are placed in position. When these implants have been placed and the gums and the bone have healed after this surgical procedure, a number of impressions of the jaw together with the implants are taken, in order to produce a provisional model, i.e., a wax model, of the superstructure. This provisional model then has to be fitted on the patient. If the provisional model is satisfactory, the final superstructure is produced on the basis of this provisional model.

In a variant of the above method, the above-mentioned first step is to make a CT-scan of the jaw on which the superstructure is to be fixed, and a template is produced directly, on the basis of the electronic information from this CT scan. The superstructure is then further produced according to the technique described above.

WO 03/003933 describes a method for producing a superstructure for a toothless jaw. At least one reference element is fixed to the jaw, and the location of anatomical structures of the above mentioned jaw relative to this reference element is then determined, means being provided on the template for fixing the latter on the jaw relative to the reference element and, taking into account the determined location of the anatomical structures, the position of the aperture in the template is determined in such a way that the critical anatomical structures, such as nerve bundles or blood vessels, are not touched during the drilling of the above mentioned hole when the template has been fixed on the jaw.

However, the said mini-implants have to be implanted in the bone, which is intrinsically tied to a short operation by drilling a hole for each of these mini-implants. Placing these mini-implants is a critical step and it very much depends on the experience of the surgeon to avoid any injury of blood vessels or nerve bundles. Moreover, the mini-implants are often placed in regions of the jaw where the mucosa is quite thick rendering the necessary surgery to place said mini-implants intricate.

The problem of the present invention was to find an alternative for patients who still have a tooth, a stump of a tooth or who already have an implant or a prosthetic device.

The problem is solved by a non-invasive reference device according to claim 1. Preferred embodiments are subject to dependent claims.

A non-invasive reference device is intended to be temporarily fixed on a tooth, a tooth stump, an already present implant or a prosthetic device (e.g. a crown) and has at least one edge. Said device is made of a biocompatible, radiopaque material. Due to the reference device according to the present invention it is possible to determine the location of anatomical structures of the jaw relative to said at least one reference device. With the reference device according to the present invention it is possible to obtain comparable results concerning the anatomical structure of the jaw as obtained by the mini-implants. However, since no invasive step is necessary to obtain the required information it is much more convenient for the patient. Further, avoiding an additional invasive step eliminates the possible risk of infection and subsequent complications which is associated to any invasive step.

The non-invasive reference device has at least one edge. Shapes such as edges and corners provide "landmarks" which are easily detectable in CT-scans. This "landmark" is used to determine the relative location of anatomical structures in the jaw. An edge is suitable as reference points ("landmark") for a 3D-scan (3-dimensional scan), since it is detectable with accuracy. In one embodiment of the present invention three reference devices with at least one edge are fixed on one tooth, one tooth stump, an implant or a prosthetic device in order to have three different reference points in the patient's mouth.

Since said reference device is fixed on a tooth, a tooth stump, an implant or a prosthetic device (e.g. a crown) by an adhesive or cement, it is a non-invasive procedure, which is fast and comfortable for the patient. Possible adhesives are for instance light-curable adhesives. Examples for adhesives are composites and examples for cements are glasionomers.

Once the treatment has been terminated the dentist can remove the non-invasive reference device. The non-invasive reference device may be removed by breaking the cement. The removal of the reference device may irreversibly deform the device.

Radiopaque materials are materials that block the passage of radiant energy, e.g. radiation such as X-rays. Radiopaque materials block the passage of X-rays and are thus visible in X-ray scans.

In a preferred embodiment the biocompatible, radiopaque material is selected from the group consisting of titanium, titanium alloys, ceramics and plastics. Titanium and its alloys are preferred. Titanium shows an excellent biocompatibility, is radiopaque and - importantly - does not scatter radiation such as X-rays. Ceramics and plastics are even more preferred. An advantage of ceramics and plastics is the possibility to match their appearance, in particular their colour, to the surrounding environment (e.g. teeth). They may also be colourless. Ceramics and plastics often comprise a marker material, such as barium sulphate. Materials showing a high proportion of scattered radiation in an X-ray scan (e.g. steel) are less suitable for a non-invasive reference device according to the present invention.

In another preferred embodiment the reference device has at least three edges. Edges which may in addition form a corner are easily detectable in X-ray scans. Although already one edge is sufficient to provide a "landmark" relative to which the location of any other (anatomical) structure in the jaw can be determined, more than one edge is preferred since a plurality of edges and corners further improves the precision of determining the location of other structures. This advantage also applies if different X-ray scans are superimposed.

Thus, if the reference device has only one edge usually three reference devices are employed in order to have three different "landmarks". If, however, the reference device itself already comprises three edges, the use of one reference device is sufficient. Of course, use of more than one reference device having three edges further enhances precision.

A very simple example of such a reference device is a flat plat having the shape of a rectangle or a square. With a single reference device providing said "landmark" it would already be possible to obtain excellent results during a 3D-scan.

In a preferred embodiment the reference device comprises fixing means. The fixing means are intended to be mounted on a template, e.g. a scan template or a drill template. The reference device having fixing means has not only the function to provide a reference in the determination of the relative location of other structures in the jaw, it also has the further function to serve as a fixation point for templates. It advantageously allows to (repeatedly) fix, for instance, a scan template. The fixing means comprised in the reference device and their respective counterpart comprised in the template provides a detachable connection between them. Thus, a template can be fixed on the reference device as many times as needed. Most advantageously, the spatial orientation of the template is always precisely the same as the reference device, temporarily fixed on tooth, remains in its position until it is no longer needed.

The reference device can be removed from the patient's tooth or tooth stump by the dentist only. This means that the information can not get lost between two consultations.

Additionally, if the template has to be fixed several times, it is guaranteed that it has all the time the same position in the patient's mouth.

Preferred fixing means are means for clicking, clamping and/or sliding. Particularly preferred is a slide rail or a slide member.

In a further embodiment the slide member has a locking device. This makes it possible to prevent unwanted linear displacement. Such a locking element can be a pin, a screw or a detachable snap fit.

In one preferred embodiment the slide rail has essentially a dovetail slot cross-section, whereas the slide members have a dovetailed projection cross-section adapted to the dovetail slot but with a flange on the top. This construction allows simple assembly of the slide rail and the slide member. In addition the dovetailed slot cross-section of the slide rail allows very good guiding of the slide member. The slide member can additionally be secured by clamping to the slide rail.

According to one embodiment of the present invention the reference device comprises fixing means which are intended to be mounted on a template. Due to the fixation of the template on the reference device, the template is no longer fixed on the tooth itself but on the fixing means of the reference device. Therefore, the template can not slip away, which is dangerous during drilling.

Said fixing means are preferably means for clicking, clamping and/or sliding. The fixing means of the reference device is an element which engages the counterpart of the template. Such clicking, clamping and/or sliding means are known to a person skilled in the art. Examples are slide rail and slide member, snap fastener.

By using the reference device according to the present invention a drill template may be produced. First, a wax model is made using an impression that is taken from the patient's jaw. Then a scan template is prepared based on said wax model comprising fixing means which are the counterpart of the fixing means of the reference device. The fixing means of the reference device are engaged with the fixing means of the template. The template and the reference device together are then brought into the correct position in the patient's mouth. The fixing means of the reference device is fixed on the patient's tooth or tooth stump by a light curable adhesive. Of course also other adhesives or cements are usable for this purpose. After fixation of the reference device the template may be removed as often as it is required (comfort of the patient etc.). A CT-scan has then to be made when the scan template has been placed on the correct position, in order to determine the anatomical bone structure and the precise location of nerve bundles and blood vessels. Thereafter, the scan template is removed and converted in a drill template by bringing openings in the template on the position which correspond to the insertion point of the implant. Said opening is provided with a guiding cylinder in order to allow an optimal guiding of a drill. The conversion of the scan template in the drill template has the advantage that no information gets lost which could be the case if a template is produced based on a replica, which of course would also be possible with the reference device according to the present invention.

The non-invasive reference device according to the present invention will be explained in more detail in the following text with reference to one exemplary embodiment, which is illustrated in the drawings and in which, purely schematically:
- Fig. 1: shows a first embodiment of the non-invasive reference device;
- Fig. 2: shows a second embodiment of the non-invasive reference device having fixing means;
- Fig. 3: shows the non-invasive reference device of Fig. 2 and its respective counterpart in an exploded view;
- Fig. 4: shows the reference device and its respective counterpart of Fig. 2 when the fixing means are engaged;
- Fig. 5: shows a lower jaw with four reference devices fixed on four different teeth; and
- Fig. 6: shows a part of a lower jaw and a drill template.

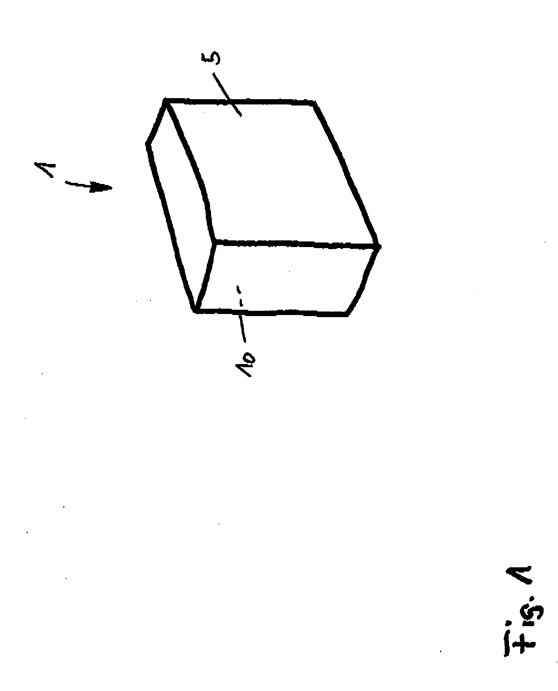

Figure 1 shows a simple embodiment of non-invasive reference device 1 having the shape of flat plate with a substantially square front side 5 and a substantially square back side 10. The reference device is fixed on a tooth by treating the back side 10 with an adhesive and subsequently placing it in a desired position on the tooth.

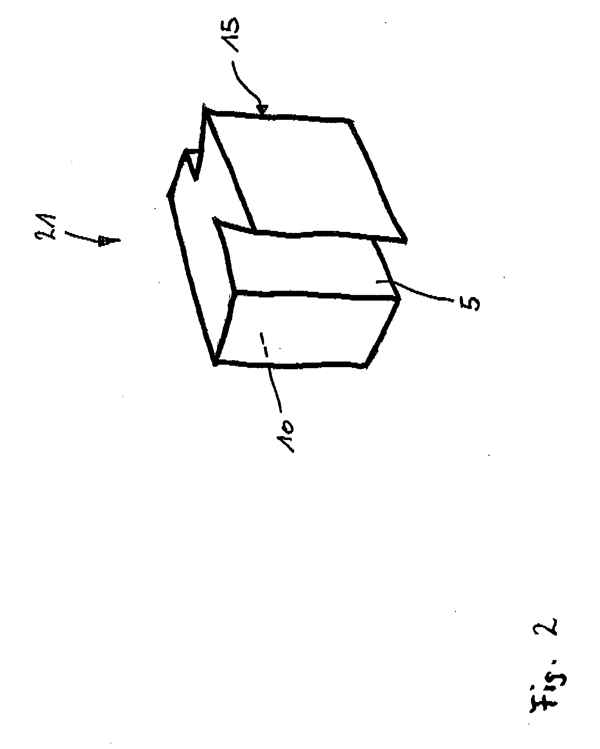

Figure 2 shows a second embodiment of the reference device. In contrast to the first embodiment shown in Figure 1 this embodiment comprises fixing means 15. Again the reference device 21 has the shape of a flat plate with a substantially square front side 5 and a substantially square back side 10. The fixing means 15 which has the shape of a dovetailed projection is located on the front side 5. Said dovetailed projection is a guide member which is intended to be inserted in a (corresponding) slide rail (a dovetail slot).

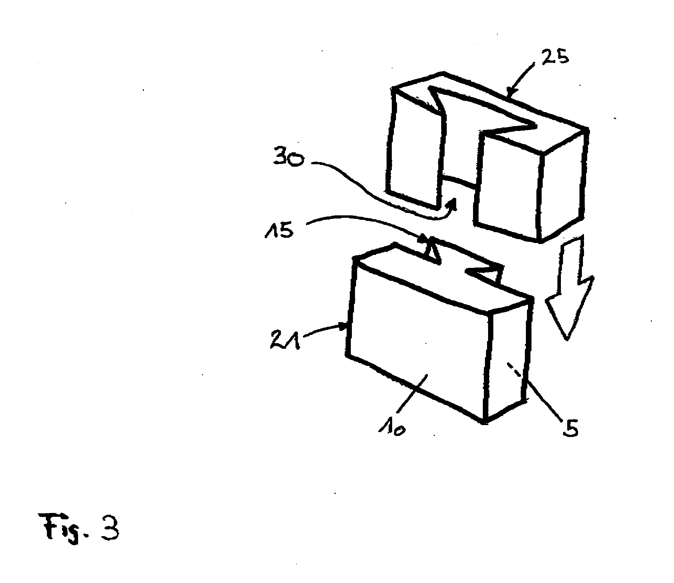

Figure 3 shows again the reference device 21 of Figure 2 together with the counterpart 25 of the fixing means 15. The reference device 21 is shown from the rear, whereby the back side 10 is visible. The front side 5 is not and the dovetailed projection 15 is only partly visible. The counterpart 25 has a dovetail slot 30. The arrow in Figure 3 indicates how the reference device 21 and the counterpart 25 are assembled when the dovetailed projection and the dovetail slot are engaged.

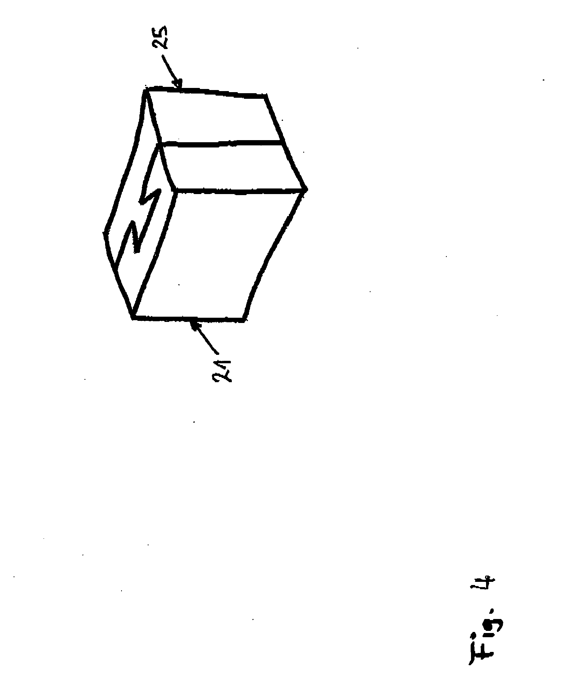

Figure 4 shows the reference device 21 and the counterpart 25 of Figure 3 in the state where the fixing means 15 and 30 (the dovetailed projection 15 and the dovetail slot 30) are engaged. The counterpart 25 is fixed for instance on a template (not shown). The fixing means 15 and 30 provide a secure and detachable connection between the reference device and the template.

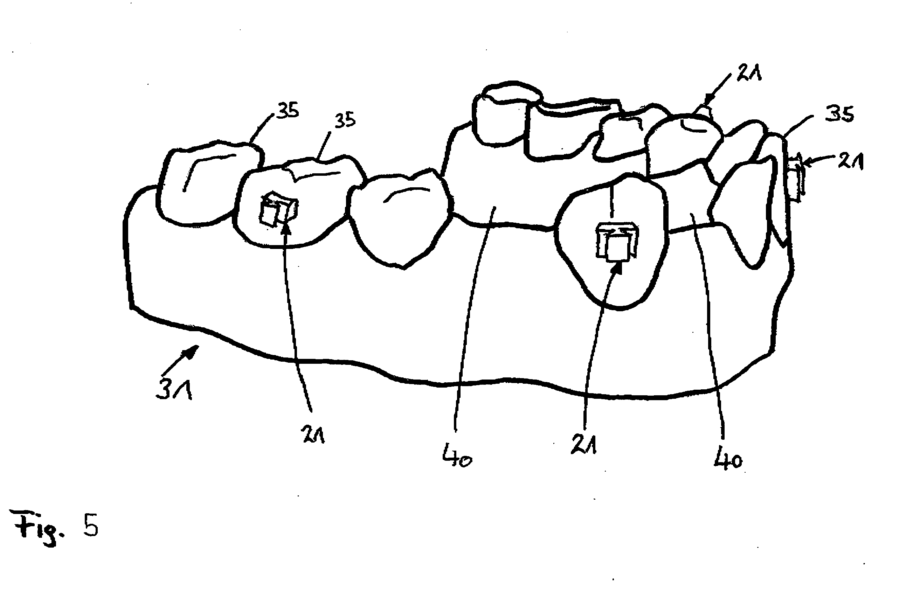

Figure 5 shows a lower jaw 31 with teeth 35. The situation shown is typical for patients in need of dental implants. While most of the teeth 35 are present, there are two teeth missing as indicated by the gaps 40. Four non-invasive reference devices 21 are (temporarily) fixed on four different teeth 35.

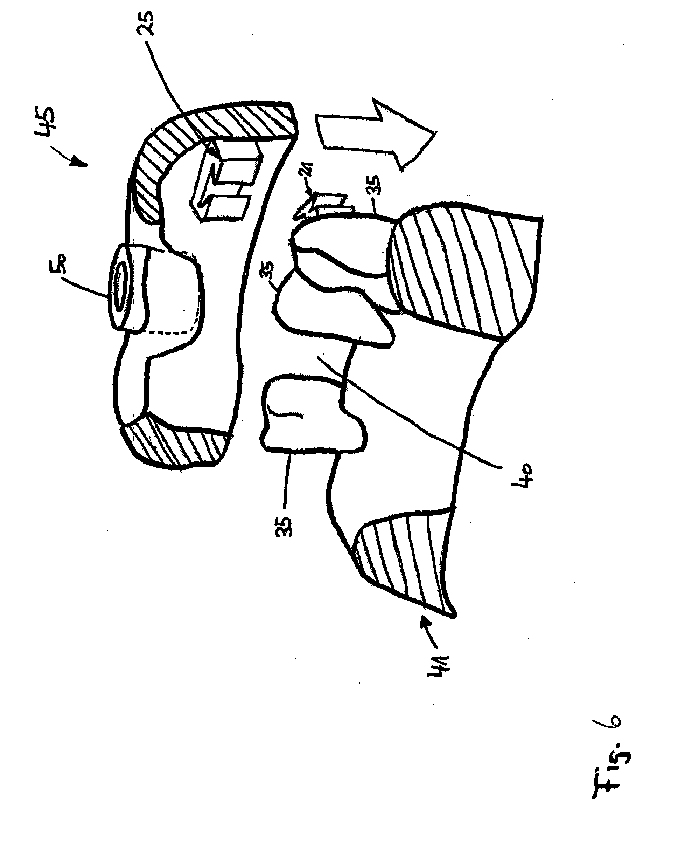

Figure 6 shows a part of lower jaw 41 with teeth 35. On a tooth 35 of the lower jaw 41 a non-invasive reference device 21 is (temporarily) fixed. Also shown is a drill template 45 with guiding means 50 (in the form of a hollow cylinder) for a drill and the counterpart 25 fixed to the drill template 45. Once the fixing means of the reference device and its counterpart are engaged, the drill template 45 is securely and detachably attached to the lower jaw and the guiding means 50 for the drill lies in the gap 40 where a tooth 35 of the lower jaw 41 is missing.

The shape of the non-invasive reference device does not necessarily have to be a small flat plate with substantially square front and back sides. It may also have rectangular, polygonal or round front and back sides. The non-invasive reference device may also have any other suitable shape.

In lieu of dovetailed projections as fixing means also other shapes may be used, e.g. half a dovetailed projection or a substantially round projection.

The non-invasive reference device may further comprise a protection cap. Such a protection cap may either comprise or consist of wax which covers the non-invasive reference device. The protection cap may also be made of any other suitable material, such as ceramics or plastics. It is attached to the reference device in any suitable manner. The protection cap advantageously prevents irritation or injury of surrounding structures (e.g. tissue, mucosa) and it is further possible to match the appearance of the protection cap (in particular the colour) to its environment, which allows an aesthetic appearance. Thus, in case the non-invasive reference device is made of titanium, the appearance of metal can be avoided by covering it.

## Claims

1. Non-invasive reference device intended to be temporarily fixed on a tooth or a tooth stump, wherein said device is made of a biocompatible, radiopaque material **characterized in that** it has at least one edge.

2. Reference device according to claim 1, whereby the biocompatible, radiopaque material is selected from the group consisting of titanium, titanium alloys, ceramics and plastics.

3. Reference device according to claim 1 or 2, **characterized in that** it has at least three edges, whereby said edges can be arranged independently from each other or they can form a corner.

4. Reference device according to any of the preceding claims, **characterized in that** it comprises fixing means which are intended to be mounted on a template.

5. Reference device according to claim 4, **characterized in that** said fixing means are means for clicking, clamping and/or sliding.

6. Reference device according to claim 5, **characterized in that** the fixing means is a slide rail or a slide member.

7. Reference device according to claim 6, **characterized in that** the slide rail has the shape of a dovetail slot and the slide member has the shape of a dovetail projection.

8. Template for drilling a hole in the bone of a lower or an upper jaw in order to place at least one implant, comprising means which are intended to be fixed on the fixing means of the reference device according to any of claims 1 to 7.

9. Use of at least one reference device according to any of claims 1 to 7 to determine the location of anatomical structures of a jaw.

10. Use of at least one reference device according to any of claims 1 to 7 for preparing a drill template, by preparing a scan template of a wax model of a patient comprising means intended to be fixed on the fixing means and the reference device engaged to said means, determining the anatomical structure of the jaw relative to said reference device, converting the scan template to a drill template by providing the scan template with holes and providing said holes with guiding cylinders.
